# EUROPÄISCHE PATENTANMELDUNG

(11) **EP 1 580 054 A2**
(43) Veröffentlichungstag der Anmeldung: **28.09.2005**
(21) Anmeldenummer: 05004609.3
(22) Anmeldetag: 03.03.2005
(51) Int. Cl.: B60J 1/20

(54) **Fensterrollo mit integriertem Winkelausgleich**

(30) Priorität: 26.03.2004 DE 102004015396
(71) Anmelder: BOS GmbH & Co. KG, 73760 Ostfildern (DE)
(72) Erfinder: Khozani, Mostafa Sharifi, 70619 Stuttgart (DE)
(74) Vertreter: Rüger, Barthelt & Abel Patentanwälte

(57) **Zusammenfassung**

Bei einem Seitenfensterrollo verläuft die Oberkante der Rollobahn (22) im ausgezogenen Zustand unter einem spitzen Winkel zur Achse der Wickelwelle (26). Um eine solche Rollobahn aufzuwickeln muss die Wickelwelle (26) eine konische Gestalt haben. Die konische Gestalt wird erreicht, indem sich die Rollobahn (22) in einem trapezförmigen Abschnitt fortsetzt, der permanent auf der zylindrischen Wickelwelle verbleibt. Dieser Abschnitt wird neben der einen Kante durch einen aufgelegten Verstärkungsstreifen in der Dicke verstärkt.

## Beschreibung

PKW verfügen in der Regel in dem hinteren Karosseriebereich über weitere Seitenfenster. Diese Seitenfenster können entweder unmittelbar in der Karosserie angebracht sein oder sie sind Bestandteil von hinteren Seitentüren. Soweit es sich um Fenster in Seitentüren handelt, sind diese nochmals unterteilt, und zwar in einen angenäherten trapezförmigen Teil und einen dreieckförmigen Teil. Der trapezförmige Teil ergibt sich aus dem Umstand, dass die Seitenscheibe in diesem Bereich absenkbar ist, um das Fenster öffnen zu können. Die obere Kante des Seitenfensters setzt sich in aller Regel aus einem im Wesentlichen geraden Abschnitt und einem gekrümmten Abschnitt zusammen, um einen Sprung in den dreickförmigen Bereich zu vermeiden. Allerdings kann die Oberkante des viereckigen Teils in erster Näherung als gerade angesehen werden. Zufolge der Karosserieform ist jedoch der Verlauf dieses Abschnittes nicht parallel zu der Unterkante. Bei heruntergelassener Seitenscheibe hat dies zur Folge, dass die Oberkante der Scheibe im vorderen Ende des Fensterschlitzes noch sichtbar ist, während sie im hinteren Teil deutlich nach unten wegtaucht.

Dieser Umstand ist bei Fensterscheiben hinnehmbar. Wenn das Seitenfenster jedoch durch ein Rollo abgeschattet werden soll, entsteht hier ein Problem, denn es ist unerwünscht, dass die Oberkante des Seitenfensterrollos entweder über die Unterkante des Fensters übersteht oder einen großen Spalt frei lässt, in den Gegenstände hineinfallen können. Dies ist deswegen von wesentlicher Bedeutung, weil im hinteren Bereich von PKWs häufig auch Kinder sitzen und die Gefahr groß ist, dass durch die Spalte irgendwelche Teile ins Innere der Tür fallen.

Es besteht deswegen ein erhöhter Bedarf dafür, bei Seitenfensterrollos im hinteren Bereich dafür zu sorgen, dass die Oberkante der Rollobahn den Auszugsschlitz vollständig schließt.

Diese Bedingung könnte theoretisch erfüllt werden, indem die Rollowelle unterhalb der unteren Fensterkante so angeordnet wird, dass sie zu der Oberkante des Fensters parallel verläuft. Einer solchen Anordnung stehen im Allgemeinen jedoch die Platzverhältnisse im Inneren einer Tür entgegen. Der Konstrukteur ist gezwungen die Rollowelle parallel zur Unterkante unterzubringen. Diese Anordnung bedingt im zum Vorderende des Fahrzeugs hin gelegene Bereich eine längere vertikale Ausdehnung der Rollobahn als im zum Heck gelegene Bereich. Beim Aufwickeln muss deswegen im Bereich der Vorderkante der Rollobahn mehr Material aufgewickelt werden als im Bereich der Hinterkante.

Es ist hierzu aus der EP 0 111 270 bekannt eine konische Wickelwelle zu simulieren. Die Wickelwelle ist ansich strikt zylindrisch, wobei die gewünschte Konizität erreicht wird, indem die Rollobahn, die an der Wickelwelle befestigt ist, einen dreieckförmigen Fortsatz aufweist. Der dreieckförmige Fortsatz ist einstückig mit dem von der Wickelwelle abwickelbaren Abschnitt. Dieser Fortsatz wird begrenzt von einer Trennlinie, die zu der Wickelwelle parallel ist und den Fortsatz von den abwickelbaren Teil abgrenzt. Weiterhin wird der Fortsatz von zwei Seitenkanten begrenzt, die jeweils von der Trennlinie ausgehen, so dass gedanklich ein rechtwinkliges Dreieck entsteht, dessen eine Kathete die Trennlinie ist.

Diese Anordnung ist jedoch auf solche Anwendungen begrenzt, bei denen die Länge der kurzen Seitenkante, die in Verlängerung der vorderen Seitenkante der Rollobahn verläuft und somit die andere Kathete des Dreiecks bildet, eine Länge hat, die kleiner ist als der Umfang der Wickelwelle. Andernfalls würde sich beim Aufwickeln während der Herstellung die Spitze in unkontrollierbarer Weise umschlagen.

Im Übrigen ist dieser Rollobahnzuschnitt während der Montage nicht einfach zu handhaben, da der Reproduzierbarkeit Grenzen gesetzt sind.

Es ist zu bedenken, dass die Wickelwelle beim Aufwickeln des dreieckigen Ausgleichsabschnitts sich letztendlich längs eines Kreisbogens bewegt, wobei der Radius des Kreisbogens durch die Lage des Ausgleichsabschnittes und der Spitze dieses Ausgleichsabschnittes festgelegt ist. Die mangelnde Steifigkeit des Materials für die Rollobahn verkompliziert die Verhältnisse zusätzlich.

Eine weitere Lösung ist aus der FR 2 750 158 bekannt. Hier wird die konische Gestalt der Wickelwelle erzeugt, indem ausgehend von einem zylindrischen Kernelement ein dreieckförmiger Flicken aufgewickelt wird. Das Aufwickeln beginnt an der langen Kathete des Zuschnitts.

Diese Anordnung ist zwar hinsichtlich der Reproduzierbarkeit etwas günstiger, erfordert aber die Handhabung von zwei getrennten Zuschnitten.

Ausgehend hiervon, ist es Aufgabe der Erfindung ein Fensterrollo für Kraftfahrzeuge zu schaffen, das leichter herstellbar ist.

Diese Aufgabe wird erfindungsgemäß durch ein Fensterrollo mit den Merkmalen des Anspruches 1 gelöst.

Bei dem neuen Fensterrollo ist wie beim Stand der Technik die Rollobahn mit dem Zusatzstück zum Erzeugen des konischen Wickelkerns einstückig. Somit setzt sich die Rollobahn aus einem von der Wickelwelle abwickelbaren Abschnitt und einem permanent auf der Wickelwelle verbleibenden Abschnitt zusammen. Der permanent auf der Wickelwelle verbleibende Abschnitt wird von einer Trennlinie, einer Basiskante und zwei Seitenkanten begrenzt. Dadurch ergibt sich eine angenäherte Trapezform, bei der die Basiskante, die kürzer ist als die Trennlinie, in einem sehr spitzen Winkel zu der Trennlinie verläuft. Eine der beiden Seitenkanten erstreckt sich etwa rechtwinklig zu der Trennlinie, während die andere Seitenkante unter einem spitzen Winkel verläuft, der jedoch größer ist als der spitze Winkel zwischen der Trennlinie und der Basiskante.

Außerdem ist ein Verstärkungsstreifen vorgesehen, der von der Basiskante ausgeht und parallel zu der ersten Seitenkante verläuft. Aufgrund dieser Gestalt kann die an sich zylindrische Wickelwelle längs der Basiskante reproduzierbar genau mit der Rollobahn verbunden werden. Es ergibt sich eine Kante, an der die Wickelwelle ausgerichtet werden kann. Außerdem ist die Wickelwelle in dieser Weise über ein relativ langes Stück bereits von Anfang an mit der Wickelwelle verbunden, so dass Verkantungen während des Aufwickelns des Ausgleichsstückes ausgeschlossen sind.

Empfindliche Spitzen, die zum Faltenbilden und Einknicken neigen, werden auf diese Weise ebenfalls vermieden.

Der von der Wickelwelle abwickelbare Abschnitt der Rollobahn wird von einer Endkante sowie zwei Seitenkanten und der bereits erwähnten Trennlinie begrenzt. Die Endkante verläuft in einem spitzen Winkel zur Trennlinie, wodurch die Rollobahn im Bereich der ersten Seitenkante länger ist als im Bereich der zweiten Seitenkante.

Zwecks Vereinfachung der Bedienung und Stabilisierung der Endkante der Rollobahn ist dort zweckmäßigerweise ein Auszugsprofil vorhanden.

Das erforderliche Durchmesserverhältnis an der Wickelwelle, das notwendig ist, damit am Schluss des Aufwickelvorgangs die Endkante der Rollobahn parallel zu der Wickelwelle bzw. unter einem gewünschten Winkel zur Winkelwelle verläuft, wird erreicht, wenn der Verstärkungsstreifen eine Länge aufweist, die der Höhe eines Dreiecks entspricht, dessen Basis die Basiskante ist und dessen eine Seite von der Verlängerung der ersten Seitenkante und dessen andere Seite die Verlängerung der zweiten Seitenkante ist. Die erwähnte Höhe steht senkrecht auf der Basiskante, was im Allgemeinen mit der Verlängerung der ersten Seitenkante gleich bedeutend ist, d.h. dieses gedachte Dreieck stellt ein rechtwinkliges oder angenähert rechtwinkliges Dreieck dar, bei dem eine Kathete die Basiskante und die andere Kathete die Verlängerung der ersten Seitenkante ist.

Günstige Verhältnisse bei der Montage der Rollobahn an der Wickelwelle ergeben sich, wenn im Bereich des Verstärkungsstreifens die Basiskante mit einem Rücksprung versehen ist. Die Tiefe des Rücksprungs liegt zwischen 1 und 15 mm, vorzugsweise bei ca. 8 mm. Im Übrigen soll jeder Wert dazwischen auch ohne ausdrückliche Erwähnung als mit beansprucht angesehen werden.

Infolge des Rücksprungs kann die Wickelwelle bei der Montage zunächst einmal ohne Behinderung längs der Basiskante aufgeklebt werden. Die Verdickung, die durch den Verstärkungsstreifen entsteht und die zu einem Verkippen und damit einer schlechten Verklebung führen könnte, wird vermieden. Erst beim Drehen der Wickelwelle und somit dem Aufrollen des Ausgleichsstücks kommt nach einem Stück Weg die Wickelwelle mit dem verdickten Bereich in Berührung. Dann allerdings ist eine sichere Verklebung der Wickelwelle mit der Rollobahn bereits sichergestellt und es können keine Montagefehler mehr auftreten. Immerhin ist zu beachten, dass im Bereich des Verstärkungsstreifens, der vorzugsweise aus demselben Material besteht wie der restliche Teil der Rollobahn, das Material doppelt so dick ist, was sonst ohne den Rücksprung die Verklebung beeinträchtigen könnte.

Um ein Stauchen des Materials beim Übergang der Wickelwelle aus dem einfach liegenden Bereich in den doppelliegenden Bereich des Verstärkungsstreifens zu vermeiden, ist der Rücksprung, dessen Breite der Breite des Verstärkungsstreifens entspricht, ein Stück weit eingeschnitten. Die Breite des Einschnitts liegt zwischen 1 bis 10 mm, vorzugsweise um die 3 mm und hat auch etwa diese Tiefe. Die Breite des Verstärkungsstreifens liegt im Bereich zwischen 10 mm und 60 mm, wobei sich diese Breite nach der Länge der Wickelwelle richtet.

Der permanent auf der Wickelwelle verbleibende Abschnitt ist vorzugsweise streifen- oder abschnittsweise mit der Wickelwelle verklebt. Dadurch wird Klebstoff eingespart und die Gefahr von Lufteinschlüssen, die später im Gebrauch bei Temperaturschwankungen zu Problemen führen können, umgangen.

Die streifenförmigen Klebebereiche verlaufen zweckmäßigerweise einerseits parallel zu der Trennlinie und andererseits parallel zur Basiskante bzw. im Rücksprungbereich parallel zur dessen Kante, die in dieselbe Richtung zeigt wie die Basiskante, da sie aus dieser einen versetzen Abschnitt bildet.

Der Verstärkungsstreifen ist ebenfalls mit einem klebfähigen Streifen ausgerüstet, damit auf alle Fälle der Ausgleichsabschnitt über die gesamte Länge der Basiskante stoffschlüssig mit der Wickelwelle verbunden ist.

Die Breite des jeweiligen streifenförmigen Bereiches ist kleiner als der Umfang der Wickelwelle.

Der Verstärkungsstreifen kann einstückig an die Rollobahn angeschnitten sein. Er kann aber auch als separater Streifen ausgeführt sein. In jedem Falle ist zweckmäßigerweise der Verstärkungsstreifen im Bereich der Basiskante mit dem Hauptteil des Ausgleichsstücks stoffschlüssig verbunden. Das andere Ende, das in Richtung auf die Trennlinie zeigt, bleibt dagegen frei, damit es sich beim Aufwickeln frei ausrichten kann und keine Falten durch Stauchung auftreten.

Die zweite Seitenkante kann als gerade Kante etwa von der Trennlinie bis zur Basiskante durchlaufen. Eine andere Möglichkeit besteht darin, die zweite Seitenkante strukturiert auszuführen. Vorzugsweise setzt sie sich im Anschluss an die Trennlinie als Verlängerung der zweiten Kante des abwickelbaren Abschnittes fort. Die Länge dieses Fortsatzes entspricht der Breite des klebfähigen Streifens. Von dort aus folgt die zweite Seitenkante der Kante des klebfähigen Streifens, um etwa bei einem Viertel bis einem Drittel der Breite der Rollobahn über eine konkav gekrümmte Linie in die im Übrigen geraden Basiskante überzugehen. Hierdurch vereinfacht sich die Montage, weil es nicht notwendig ist, über die gesamte Länge Rollobahnmaterial aufwickeln müssen.

Die Rollobahn besteht vorteilhafterweise aus einem im Wesentlichen undehnbaren Gewirke. Ein Gewirke ist biegeschlaff und kann ohne Faltenbildung in geringem Umfang in der Fläche geschert werden. Dabei ist unter Scherung einen Versatz der Endkante der Rollobahn gegenüber der Trennlinie in Richtung parallel zur Trennlinie zu verstehen.

Dies ist auch deswegen von Vorteil, weil durch das Aufwickeln auf die Wickelwelle, die durch das Ausgleichsstück angenähert konisch ist, die Rollobahn, streng genommen, ein Ausschnitt aus einem Kreisring sein müsste. Dies ist jedoch im ausgezogenen Zustand weniger ansehnlich und stattdessen werden gerade Kanten bevorzugt, die den seitlichen Rändern der Scheibe folgen.

Im Übrigen sind Weiterbildungen der Erfindung Gegenstand von Unteransprüchen.

Beim Studium der Figurenbeschreibung wird klar, dass eine Reihe von Abwandlungen möglich sind, die im Belieben des Fachmanns liegen und die sich aus dem jeweiligen Platzverhältnis ergeben.

In der Zeichnung ist ein Ausführungsbeispiel des Gegenstandes der Erfindung dargestellt. Es zeigen:
- Fig. 1: Den aufgeschnittenen Fondbereich eines Kraftfahrzeugs, mit Blick auf die rechte hintere Seitentür, und
- Fig. 2: die Rollobahn für das Seitenfensterrollo nach Figur 1, in einer Draufsicht, zusammen mit der Wickelwelle.

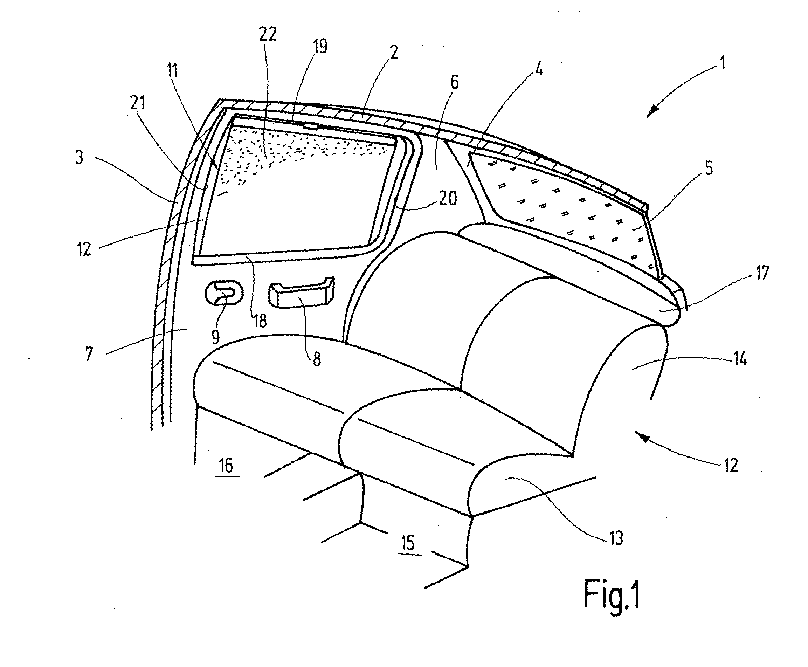

Figur 1 stellt den aufgebrochenen abgeschnitten Fondbereich eines PKW dar. Die Figur veranschaulicht einen Blick auf die rechte Innenseite, die zu der nicht veranschaulichten linken Innenseite spiegelbildlich ist. Die Darstellung ist vereinfacht, insofern als bspw. Innenstrukturen der Karosserie wie Versteifungen, Befestigungsmittel nicht gezeigt sind, da ihre Darstellung für das Verständnis der Erfindung nicht erforderlich ist. Im Übrigen werden die Begriffe "rechts", "links", "vorne", "hinten" in der Weise verwendet, wie es in der Automobiltechnik üblich ist.

Der veranschaulichte Karosserieabschnitt 1 weist ein Dach 2 auf, von dem seitlich eine B-Säule 3 zu einer nicht veranschaulichten Bodengruppe führt. Eine entsprechende B-Säule wäre auf der linken weggebrochenen Seite des Fahrzeugs zu denken. Das Dach 2 geht an seine Hinterkante in eine Heckklappe 4 über, die in der üblichen Weise an der Unterkante des Daches 2 anscharniert ist. In der Heckklappe 4 ist ein Heckfenster 5 untergebracht.

Die Heckklappe 4, bzw. die sie aufnehmende Öffnung, grenzt an eine C-Säule 6 an. Zwischen der C-Säule 6 und der B-Säule 3 befindet sich eine hintere rechte Seitentür 7, die wie bereits die obigen Erläuterung ergibt, eine spiegelbildliche Tür auf der anderen Fahrzeugseite hat.

Von der Tür 7 sind ein an der Innenseite befestigter Türgriff 8 sowie eine Öffnungsklinke 9 zu erkennen.

In der Tür 7 befindet sich am oberen Bereich ein Seitenfenster 11, in dem sich eine bewegliche Fensterscheibe 12 befindet, die in der üblichen Weise, bspw. elektrisch auf und ab zu bewegen ist, um das Fenster 11 zu öffnen. Zwischen den beiden hinteren seitlichen Türen 7 befindet sich eine Hecksitzgruppe 12 mit einer geteilten Sitzfläche 13 sowie einer zugehörigen ebenfalls geteilten Rücksitzlehne 14. Vor der Sitzfläche 13 befinden sich Fußräume 15 und 16 der Bodengruppe.

Der Spalt zwischen der Oberkante der Rücksitzlehne 14 und der Innenkontur der Heckklappe 4 wird durch eine Hutablage 17 verschlossen, die beim Öffnen der Heckklappe 4 in bekannter Weise mit nach oben geschwenkt wird. Unterhalb der Hutablage 17 und hinter der Rücksitzlehne 14 ist ein Kofferraum vorhanden.

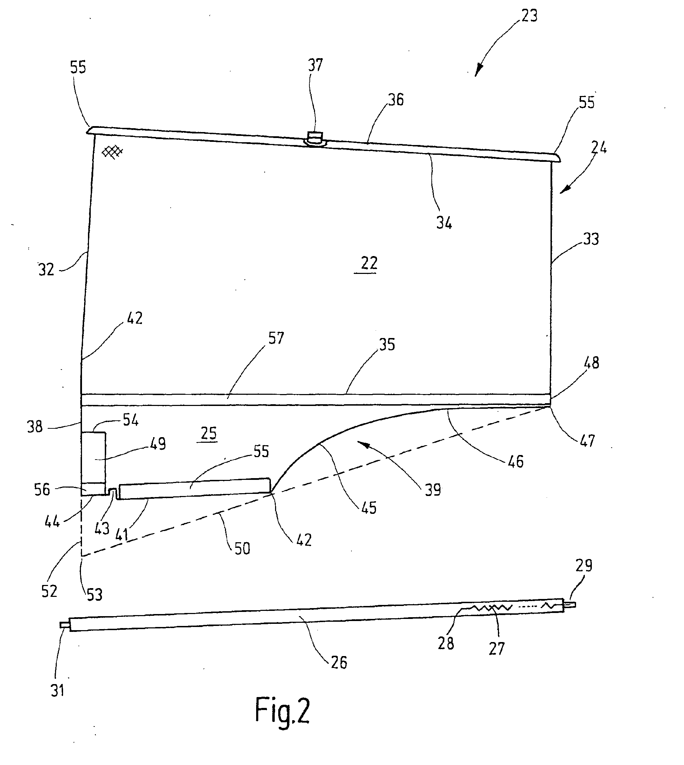

Das in der Seitentür 7 befindliche Fenster 11 wird von einer unteren geraden Kante 18 sowie einer weitgehend geraden oberen Kante 19 und zwei Seitenkanten 20 und 21 begrenzt. Die obere Kante 19 verläuft, wie gezeigt, unter einem spitzen Winkel zu der unteren Kante 18, d.h. der Abstand zwischen der oberen Kante und der unteren Kante 18 ist im Bereich der vorderen Seitenkante 21 größer als im Bereich der hinteren Seitenkante 20. Zwischen diesen Kanten 18, 19, 20, 21 des Fensters 11 kann eine Rollobahn 22, wie gezeigt, aufgespannt werden. Die Rollobahn 22 läuft durch einen Schlitz in der unteren Fensterlaibung. Die Rollobahn 22 gehört zu einem Seitenfensterrollo 23, dessen für das Verständnis der Erfindung wesentliche Teile in Figur 2 gezeigt sind. Bei dem Seitenfensterrollo 23 handelt es sich um ein manuell zu betätigendes Fensterrollo.

Die Rollobahn 22 ist ein Abschnitt eines Rollobahnzuschnittes 24. Der Rollobahnzuschnitt 24 setzt sich aus dem Abschnitt 22, der den vor dem Fenster 11 aufspannbaren Teil darstellt, und einem Abschnitt 25 zusammen, dessen genaue Struktur weiter unten beschrieben ist. Im eingefahrenen Zustand sind die Rollobahnzuschnitte 22 und 24 auf der Wickelwelle 26 aufgewickelt. Im ausgefahrenen Zustand lediglich der Abschnitt 25.

zum Aufwickeln enthält die Wickelwelle 26 in ihrem Inneren einen Federmotor 27. Der Federmotor 27 ist einenends bei 28 mit der rohrförmigen Wickelwelle 26 verbunden, während das andere Ende des Federmotors an einem Zapfen 29 befestigt ist, der drehfest in dem Inneren der Tür 7 unterhalb der unteren Fensterkante 18 aufgenommen ist. An dem anderen Ende weist die Wickelwelle 26 einen zylindrischen Zapfen 31 auf, der drehbar in einem Lagerbock sitzt, der sich im entsprechenden Abstand ebenfalls unterhalb der unteren Fensterkante 18 befindet. Die Wickelwelle 26 ist, wie erwähnt, ein zylindrisches Stahlrohr und sie verläuft in montiertem Zustand innerhalb der Tür 7, d.h. zwischen der Außenhaut der Tür und der Türinnenverkleidung parallel zu der Unterkante 18 des Fensters 11.

Der Rollobahnabschnitt 22 wird von einer ersten Seitenkante 32, einer dazu etwa parallel verlaufenden zweiten Seitenkante 33, einer Ober- oder Endkante 34 und eine Trennlinie 35 begrenzt. Die Ober- oder Endkante 34 ist mit einem diese Kante aussteifenden Auszugsprofil 36 versehen, das etwa in der Mitte einen Haken 37 aufweist, der entweder mit der Oberkante der Fensterscheibe 12 des Fensters 11 zu verhaken ist oder in eine spezielle Öse an der Innenseite der Seitentür 7 einzuhängen ist. Das Auszugsprofil 36 ist gerade und entspricht damit in seinem Verlauf angenähert der oberen Kante 19 des Seitenfensters 11.

Entsprechend der trapezförmigen Gestalt des Fensters 11 ist auch der Abschnitt 22, d.h. der ausziehbare Teil der Rollobahn 22 trapezförmig, in dem Sinne, dass die Trennlinie 35, an der der Abschnitt 22 in den Abschnitt 25 übergeht, unter einem spitzen Winkel zu der Ober- oder Endkante 34 bzw. im Auszugsprofil 36 verläuft.

Der einstückig in den Abschnitt 22 übergehende Abschnitt 25 dient dem Zweck dafür zu sorgen, dass, wenn der Abschnitt 22 auf die Wickelwelle 26 aufgewickelt ist, das Auszugsprofil 36 exakt parallel zu der Unterkante 18 des Fensters 11 verläuft, um so den Schlitz zu verschließen, durch den hindurch die Rollobahn 22 beim Ausfahren aus dem Türinneren herausgezogen wird. Dieser Spalt kann derselbe Spalt sein, durch den auch in bekannter Weise die versenkbare Seitenscheibe beim Öffnen des Fensters verschwindet.

Der Abschnitt 25 dient somit letztlich als Wickelausgleich um dafür zu sorgen, dass im Bereich der Seitenkante 32 mehr Material auf die Wickelwelle 26 aufgewickelt wird als im Bereich der Seitenkante 33.

Der den Aufwickelausgleich bildende Abschnitt 25 des Zuschnitts 24 wird von einer ersten Seitenkante 38, einer ihrem gegenüber liegenden zweiten Seitenkante 39, der Trennlinie 35 und einer Basiskante 41 begrenzt. Die Basiskante 41 verläuft im spitzen Winkel zu der Trennlinie 35, und zwar wie gezeigt so, dass sowohl die Basiskante 41 als auch die Oberkante 34 in dieselbe Richtung auf die Trennlinie 35 zu konvergieren.

Die Seitenkante 38 ist eine gerade Kante, die ohne Sprung in die Seitenkante 32 übergeht. Die Seitenkante 32 kann bei 42 einen geringfügigen Knick aufweisen, um auf diese Weise einen Ausschnitt aus einem Ring anzunähern.

Wie ersichtlich, ist die Basiskante 41 deutlich kürzer als es der Länge der Trennlinie 35 entspricht. Die Länge der Basiskante 41 beträgt ca. die Hälfte bis ein Drittel der Länge der Trennlinie 35. Die Basiskante 41 beginnt an einer Ecke 42, die sich im inneren Bereich zwischen den Verlängerungen der beiden Seitenkanten 32 und 33 befindet und führt von dort gerade bis zu einem Einschnitt 43. Ab dem Einschnitt 43 bildet die Basiskante 41 einen geraden Rücksprung 44, dessen Abschlusskante parallel zu der Verlängerung des längeren Stücks der Basiskante 41 verläuft. Im Bereich des Rücksprungs 44 springt die Basiskante 41 ca. 8 mm zurück. Die Breite des Einschnitts 43 beträgt zwischen 2 mm und 10 mm vorzugsweise ca. 4 mm während die Tiefe des Einschnitts ca. 4 mm lang ist.

Die zweite Seitenkante 39 beginnt bei der Ecke 42 und beginnt mit einem konkaven Abschnitt 45, der bei 46 in ein gerades Stück übergeht, das etwa parallel zu der Trennlinie 35, jedoch in einem geringen Abstand zu bis zu einer Ecke 47 verläuft. Von hier aus geht die Seitenkante 39 mit einem geraden Abschnitt 48 unmittelbar in die Seitenkante 33 über.

Beginnend bei dem Rücksprung 44 ist parallel zu der ersten Seitenkante 38 ein Verstärkungsstreifen 49 aufgelegt, der unmittelbar im Anschluss an den Rücksprung 44 mit dem Abschnitt 25 streifenförmig verklebt ist. Der Verstärkungsstreifen 49 ist ca. 40 mm breit, gemessen in Richtung parallel zu der Basiskante 41.

Wie die Figur erkennen lässt, nähert der Abschnitt 25 des Zuschnitts 24 ungefähr ein Dreieck an. Dieses Dreieck ist etwa ein rechtwinkliges Dreieck, dessen eine Kathete die Trennlinie 35 ist, an der die beiden Abschnitte 22 und 25 einstückig ineinander übergehen. Die andere Kathete ist die Verlängerung der ersten Seitenkante 38, während die Hypotenuse eine gestrichelte Linie 51 ist, die einerseits etwa in dem Bereich beginnt, wo die Trennlinie 35 die zweite Seitenkante 33 schneidet und die andererseits durch die Ecke 42 geht, an der die Basiskante 41 in die zweite Seitenkante 39 übergeht. Die gestrichelte Verlängerung 52 der Seitenkante 38 und die Hypotenuse 51 schneiden sich an einer Spitze 53. Der Abstand dieser Spitze 53 von der Kante des Rücksprungs 44 entspricht der Länge des rechteckigen Verstärkungsstreifens 49, gemessen ab der Kante 44 bis zu seiner der Trennlinie 35 benachbarten Kante 54.

Der so erhaltene Zuschnitt 24 ist im Bereich des Ausgleichsabschnittes 25 mit der Außenfläche der Wickelwelle 26 stoffschlüssig verbunden. Dazu verläuft längs der Basiskante 41 zwischen dem Einschnitt 43 und der Ecke 42 auf der dem Betrachter zugekehrten Seite ein klebfähig ausgerüsteter Streifen 55. Dessen Breite ist gering bezogen auf den Abstand der Basiskante 41 von der Trennlinie 35. Ein weiterer klebfähig ausgerüsteter Streifen 56 befindet sich auf der dem Betrachter zugekehrten Seite des Verstärkungsstreifens 49 zwischen dem Einschnitt 43 und der Seitenkante 38. Die Breite des Streifens 56 entspricht der Breite des Streifens 55.

Ein weiterer auf der dem Betrachter zugekehrten Seite vorhandener klebfähig ausgerüsteter Streifen 57 folgt der Trennlinie 35 und er erstreckt sich von Trennlinie 35 in den Abschnitt 25. Die Breite des Streifens 56 entspricht der Länge des geraden Abschnitts 48 der Seitenkante 39.

Zur Montage wird die Wickelwelle 46 auf den klebfähigen Streifen 55 aufgelegt, und zwar so, dass ihre Längsachse zu der Basiskante 41 parallel liegt. Sie wird möglichst dicht neben der Basiskante 41 aufgeklebt, damit sie während des Aufklebens zunächst noch nicht an dem Streifen 56 anhaftet oder diesen berührt, denn in diesem Bereich liegt das Material doppelt, was die saubere Verklebung des Streifens 55 im Anschluss an den Einschnitt 43 behindern würde.

Nach dem ordnungsgemäßen Verkleben wird die Wickelwelle 26 auf der dem Betrachter zugekehrten Seite auf dem Abschnitt 25 in Richtung auf die Trennlinie 35 gerollt. Dabei bewegt sie sich längs eines Rings, dessen Mittelpunkt rechts von den Seitenkanten 33 und 48 liegt. Während der Rollbewegung läuft sie auf dem Verstärkungsstreifen 49, während sie sich am anderen Ende auf der flächigen ebenen Unterlage abwälzt. Am Schluß der Aufrollbewegung liegt die Wickelwelle mit ihrer Achse parallel zu der Trennlinie 35 und der Streifen 57 fixiert den Wickel dauerhaft auf der Wickelwelle 26.

Am Schluss dieses Montageschrittes wird eine Wickelwelle erreicht, die nicht mehr zylindrisch ist wie die Wickelwelle 26, sondern ein angenäherter schlanker Konus, der dort, wo die Seitenkante 48 liegt, den Durchmesser der ursprünglichen Wickelwelle 26 hat, während er im Bereich der Seitenkante 38 entsprechend der Anzahl der Umgänge der Wickelwelle durch das Material des Zuschnittes 24 im Durchmesser vergrößert ist. Etwa bis zu einer Linie, die die Ecke 42 beim Aufwickeln beschreibt, bildet der auf der Wickelwelle 26 entstandene Wickel einen recht genauen Konus, während im Anschluss daran, d.h. im Bereich des Abschnittes 45 in der Seitenkante 39, die exakte Konusgestalt einen konkaven Rotationskörper bildet.

Gleichwohl reicht die Annäherung aus, um anschließend faltenfrei die eigentliche Rollobahn 22, d.h. diesen trapezförmigen Abschnitt auf den erhaltenen konusförmigen Körper der Wickelwelle aufwickeln zu können.

Bei Auf- und Abwickeln, d.h. beim Ausfahren und Einfahren der Rollobahn 22 wird lediglich dieser Abschnitt von der Wickelwelle 26 abgewickelt, während der Abschnitt 25 permanent verbleibt.

Der Durchmesserunterschied des erzeugten kegelförmigen Aufwickelköpers, bestehend aus der Wickelwelle 26 und dem Abschnitt 25, ist so gewählt, dass am Schluss des Aufwickelvorgangs die Ober- oder Endkante 34 mit dem Auszugsprofil 36 unter einem vorbestimmten gewünschten Winkel zu der Achse der Wickelwelle 26 verläuft. Im beschriebenen Falle soll die Kante parallel zur Fensterunterkante 18 liegen, um den dort vorhandenen Auszugsschlitz oder -spalt weitgehend zu verschließen.

Damit ein definierter Anschlag entsteht, kann das Auszugsprofil 36 an beiden Enden, wie bei 55 gezeigt, seitlich über die beiden Seitenkanten 32 und 33 überstehen. Mit diesem überstehenden Stücken kann sich das Auszugsprofil an Anschlägen anlegen, die sich unterhalb des Auszugsschlitzes in dem Türinneren befinden, um einen stabilen Schlitzabschluss zu erhalten.

Die Erfindung betrifft im Wesentlichen die Art und Weise wie ein schlanker kegelförmiger Wickelkörper für eine Rollobahn erzeugt werden kann. Dabei wurde das Ausführungsbeispiel anhand eines manuellen Rollos erläutert. Es versteht sich jedoch ohne Weiteres, dass auch eine elektrische Betätigung möglich ist.

Bei einem Seitenfensterrollo verläuft die Oberkante der Rollobahn im ausgezogenen Zustand unter einem spitzen Winkel zur Achse der Wickelwelle. Um eine solche Rollobahn aufzuwickeln muss die Wickelwelle eine konische Gestalt haben. Die konische Gestalt wird erreicht, indem sich die Rollobahn in einem trapezförmigen Abschnitt fortsetzt, der permanent auf der zylindrischen Wickelwelle verbleibt. Dieser Abschnitt wird neben der einen Kante durch einen aufgelegten Verstärkungsstreifen in der Dicke verstärkt.

## Patentansprüche

1. Fensterrollo (23) für Kraftfahrzeuge
mit einer Wickelwelle (26), die eine zylindrische Gestalt aufweist,
mit einem Rollobahnzuschnitt (24), der eine von einem Rechteck abweichenden Gestalt aufweist und der sich einstückig aus einem ständig auf der Wickelwelle (26) verbleibenden Abschnitt (25) und einem von der Wickelwelle (26) abwickelbaren Abschnitt (22) zusammensetzt,
wobei der permanent auf der Wickelwelle (26) verbleibende Abschnitt (25) von einer Trennlinie (35), einer Basiskante (41) und zwei Seitenkanten (38,39) begrenzt ist, von denen
- die Trennlinie (35) den auf der Wickelwelle (26) verbleibenden Abschnitt (25) von dem von der Wickelwelle (26) abwickelbaren Abschnitt (22) abgrenzt und zu der Achse der Wickelwelle (26) parallel ist,
- die Basiskante (41) in einem spitzen Winkel zu der Trennlinie (35) verläuft und kürzer als die Trennlinie (35) ist,
- die erste Seitenkante (38) sich zwischen der Basiskante (41) und der Trennlinie (35) erstreckt und mit der Trennlinie (35) einen Winkel einschließt, der zumindest nahe bei 90° liegt, und
- die zweite Seitenkante (39) sich zwischen der Basiskante (41) und der Trennlinie (35) erstreckt, und
mit einem Verstärkungsstreifen (49), der längs der ersten Seitenkante (39) verläuft, von der Basiskante (41) ausgeht und auf dem auf der Wickelwelle (26) verbleibenden Abschnitt (25) aufliegt.

2. Fensterrollo nach Anspruch 1, **dadurch gekennzeichnet, dass** der von der Wickelwelle (26) abwickelbare Abschnitt (22) des Rollobahnzuschnitts (24) von einer Endkante (34) sowie zwei Seitenkanten (32,33) und der Trennlinie (35) begrenzt ist, wobei die Endkante (34) in einem spitzen Winkel zu der Trennlinie (35) verläuft, die erste Seitenkante (32) etwa in Verlängerung der ersten Seitenkante (38) des auf der Wickelwelle (26) verbleibenden Abschnitts (25) und die zweite Seitenkante (33) zumindest etwa parallel zu der ersten Seitenkante (32) verläuft.

3. Fensterrollo nach Anspruch 2, **dadurch gekennzeichnet, dass** die Endkante (34) mit einem Auszugsprofil (36) versehen ist.

4. Fensterrollo nach Anspruch 1, **dadurch gekennzeichnet, dass** der Verstärkungsstreifen (49) eine Länge aufweist, die der Höhe eines Dreiecks entspricht, dessen Basis die Basiskante (41) ist, dessen eine Seite die Verlängerung der ersten Seitenkante (38) und dessen anderer Seite die Verlängerung der zweiten Seitenkante (39) ist.

5. Fensterrollo nach Anspruch 1, **dadurch gekennzeichnet, dass** die Basiskante (41) im Bereich des Verstärkungsstreifens (49) mit einem Rücksprung (44) versehen ist.

6. Fensterrollo nach Anspruch 5, **dadurch gekennzeichnet, dass** die Tiefe des Rücksprungs (44) zwischen 1 und 10 mm liegt.

7. Fensterrollo nach Anspruch 5, **dadurch gekennzeichnet, dass** der Rücksprung (44) von dem übrigen Teil der Basiskante (41) durch einen Einschnitt (43) abgegrenzt ist, dessen Breite gemessen in Längsrichtung der Basiskante (41) zwischen 1 und 10 mm vorzugsweise ca. 3 mm beträgt.

8. Fensterrollo nach Anspruch 1, **dadurch gekennzeichnet, dass** die Breite des Verstärkungsstreifens (49) zwischen 10 und 60 mm vorzugsweise 40 mm beträgt.

9. Fensterrollo nach Anspruch 1, **dadurch gekennzeichnet, dass** der permanent auf der Wickelwelle (26) verbleibende Abschnitt (25) zumindest streifen- oder abschnittsweise mit der Wickelwelle (26) verklebt ist.

10. Fensterrollo nach Anspruch 9, **dadurch gekennzeichnet, dass** der ständig auf der Wickelwelle (26) verbleibende Abschnitt (25) einen parallel zu der Trennlinie (35) verlaufenden Streifen (57) aufweist, der mit der Wickelwelle (26) verklebbar ist.

11. Fensterrollo nach Anspruch 9, **dadurch gekennzeichnet, dass** neben der Basiskante (41) eine Streifen (55,56) verläuft, der mit der Wickelwelle (26) verklebbar ist.

12. Fensterrollo nach Anspruch 9, **dadurch gekennzeichnet, dass** der Verstärkungsstreifen (49) an seinem Ende, das der Basiskante (41) benachbart ist, in einem streifenförmigen Bereich (56) mit der Wickelwelle (26) verklebbar ist.

13. Fensterrollo nach Anspruch 9, **dadurch gekenn** **zeichnet, dass** der streifenförmige Bereich (55,56,57) jeweils eine Breite aufweist, die kleiner ist als der Umfang der Wickelwelle (26).

14. Fensterrollo nach Anspruch 1, **dadurch gekennzeichnet, dass** der Verstärkungsstreifen (49) mit dem Rollobahnzuschnitt (24) lediglich stoffschlüssig verbunden ist.

15. Fensterrollo nach Anspruch 1, **dadurch gekennzeichnet, dass** der Verstärkungsstreifen (49) mit dem Rollobahnzuschnitt (25) einstückig ist.

16. Fensterrollo nach Anspruch 10, **dadurch gekennzeichnet, dass** die zweiten Seitenkante (39) ausgehend von dem benachbarten Ende der Trennlinie (35) ein Stück weit (48) entsprechend der Breite des klebfähigen Streifens (57) in Verlängerung der zweiten Seitenkante (33) des abwickelbaren Abschnitts (22) verläuft, im Anschluss daran im Abstand des klebfähigen Streifens (57) der Trennlinie (35) ein Stück weit in Richtung auf die erste Seitenkante (38) folgt und von dort in einem gekrümmten Verlauf (39) in die Basiskante (41) übergeht.

17. Fensterrollo nach Anspruch 1, **dadurch gekennzeichnet, dass** die erste Seitenkante (38) eine gerade Kante ist.

18. Fensterrollo nach Anspruch 1, **dadurch gekennzeichnet, dass** die Basiskante (41) gerade ist oder sich aus geraden Abschnitten zusammensetzt.

19. Fensterrollo nach Anspruch 1, **dadurch gekennzeichnet, dass** der Rollobahnzuschnitt (24) aus einem in Wesentlichen undehnbaren Gewirk besteht.

20. Fensterrollo nach Anspruch 9, **dadurch gekennzeichnet, dass** der auf der Wickelwelle (26) verbleibende Abschnitt (25) lediglich längs der Streifen (55,56,57), die der Trennlinie (35) bzw. der Endkante (41) folgen, mit der Wickelwelle (26) verklebt ist.

21. Fensterrollo nach Anspruch 1, **dadurch gekennzeichnet, dass** die Länge der ersten Seitenkante (38) zuzüglich der Länge des Verstärkungsstreifens (49) derart bemessen ist, dass der hierdurch erzeugte effektive Durchmesser der Wickelwelle zu einem vorgesehenen Verlauf der Endkante (34) führt, wenn die Rollobahn (22) aufgewickelt ist.

22. Fensterrollo nach Anspruch 1, **dadurch gekennzeichnet, dass** der Wickelwelle (22) einer Antriebseinrichtung (27) zugeordnet ist.
